Europäisches Patentamt

European Patent Office

Office européen des brevets

(11) Publication number: **0 342 234 B1**

(12) **EUROPEAN PATENT SPECIFICATION**

(45) Date of publication of patent specification: **25.05.94** (51) Int. Cl.⁵: **C08F 12/08**

(21) Application number: **87907535.6**

(22) Date of filing: **17.11.87**

(86) International application number:
**PCT/JP87/00891**

(87) International publication number:
**WO 89/04846 (01.06.89 89/12)**

The file contains technical information submitted
after the application was filed and not included in
this specification

(54) STYRENIC POLYMER MOLDINGS.

(43) Date of publication of application:
**23.11.89 Bulletin 89/47**

(45) Publication of the grant of the patent:
**25.05.94 Bulletin 94/21**

(84) Designated Contracting States:
**BE CH DE FR GB IT LI NL SE**

(56) References cited:
**EP-A- 0 210 615**
**JP-B- 4 689 88**

**Encyclipedia of Polymer Science and Engineering, vol.16,(1989),pp 210-215**

**Okamura Seizo et al. (Authors) "Kobunshi Kagaku Joron", 1 May 1970 (01.05.70), Kagaku Dojin P. 40-48 (2.2 Kobunshi no Bunshiryo to Bunshiryo Bunpu no Ko)**

(73) Proprietor: **IDEMITSU KOSAN COMPANY LIMITED**
**1-1, Marunouchi 3-chome**
**Chiyoda-ku**
**Tokyo 100(JP)**

(72) Inventor: **NAKANO, Akikazu Idemitsu Kosan Company Limited**
**1280, Kamiizumi, Sodegauramachi**
**Kimitsu-gun**
**Chiba 299-02(JP)**
Inventor: **SUZUKI, Masakazu Idemitsu Kosan Company Limited**
**1280, Kamiizumi, Sodegauramachi**
**Kimitsu-gun**
**Chiba 299-02(JP)**
Inventor: **ISHIHARA, Nobuhide Idemitsu Kosan Company Limited**
**1280, Kamiizumi, Sodegauramachi**
**Kimitsu-gun**
**Chiba 299-02(JP)**

Inventor: **KURAMOTO, Masahiko Idemitsu Kosan Company Limited 1280, Kamiizumi, Sodegauramachi Kimitsu-gun Chiba 299-02(JP)**

(74) Representative: **Türk, Gille, Hrabal, Leifert Brucknerstrasse 20 D-40593 Düsseldorf (DE)**

## Description

The present invention relates to a shaped article of a styrene-based polymer or, more particularly, to a shaped article of a styrene-based polymer having excellent mechanical strengths and heat resistance.

While styrene-based polymers or, in particular, polystyrenes hitherto used usually have a stereospecificity of an atactic structure, such an atactic polystyrene is not crystallizable so that the mechanical strengths and heat resistance thereof are poor and no improvements can be expected in the physical properties thereof even by drawing. Besides, a polystyrene having a stereospecificity of an isotactic structure is also known and a proposal has been made of a shaped article of the same with drawing [Kobunshi Kagaku, volume 21, page 206 (1964)]. Such an isotactic polystyrene, however, has a low velocity of crystallization and the crystalline structure thereof has a spiral configuration so that the effect to be obtained by drawing cannot be fully exhibited.

The inventors have been successful in developing a styrene-based polymer having a high syndiotacticity as described in EP-A-0 210 615.

The present invention has an object to develop a shaped article having excellent properties such as mechanical strengths, heat resistance and the like by using the above mentioned novel styrene-based polymer of a syndiotactic structure as the base material.

Namely, the present invention provides a shaped article of a styrene-based polymer prepared by drawing a styrene-based polymer having a weight-average molecular weight of at least 100,000. and a stereospecificity of syndiotacticity of at least 85% in the racemic pentad as determined by the nuclear magnetic resonance spectrometric analysis with a carbon isotope to at least 200% in the uniaxial drawing and at least 150% in each direction in the biaxial drawing, which is excellent in the mechanical strengths such as elastic modulus, impact strength and the like and heat resistance.

The base material of the shaped article of the present invention has a mainly syndiotactic structure or, in other words, a steric structure in which the phenyl groups or substituted phenyl groups as the pendant groups are directed alternately to the reverse directions relative to the main chain formed of carbon-to-carbon linkages. The tacticity thereof can be quantitatively determined by the nuclear magnetic resonance method with a carbon isotope ($^{13}$C-NMR method).

The tacticity determined by the $^{13}$C-NMR method can be expressed by the proportion of an uninterrupted sequence of a plural number of the structural units such as the diad for the sequence of two units, triad for the sequence of three units and pentad for the sequence of five units. The styrene-based polymer having a mainly syndiotactic structure as implied in the present invention should include polystyrenes, poly-(alkyl styrenes), poly(halogenated styrenes), poly(alkoxy styrenes), poly(benzoic ester styrenes) and mixtures thereof as well as copolymers mainly composed thereof having a syndiotacticity of, usually, at least 85% or, preferably, at least 95% of the pentad, i.e. racemic pentad. The poly(alkyl styrenes) are exemplified by poly(methyl styrenes), poly(ethyl styrenes), poly(isopropyl styrenes), poly(tert-butyl styrenes) and the like, and the poly(halogenated styrenes) are exemplified by poly(chloro styrenes), poly(bromo styrenes) and the like. The poly(alkoxy styrenes) are exemplified by poly(methoxy styrenes), poly(ethoxy styrenes) and the like.

Although, as is described above, the styrene-based polymer used in the present invention should usually have at least 85% of the syndiotacticity in the racemic pentad, a quite satisfactory tensile modulus can be exhibited even with a somewhat lower value thereof by suitably selecting the conditions of the drawing treatment. When the syndiotacticity of a styrene-based polymer is too low, however, full improvement cannot be expected in the tensile modulus by the drawing treatment.

Besides, the styrene-based polymer used in the present invention should have a weight-average molecular weight of, desirably, at least 100,000 or, preferably, in particular, at least 300,000. When the weight-average molecular weight thereof is smaller than 100,000, no satisfactory strength and elastic modulus can be obtained. The polymer can be used without limitation by the molecular weight distribution which may be broad or narrow.

According to the present invention, a shaped article having excellent physical properties can be obtained by subjecting the above described styrene-based polymer to a drawing treatment. The drawing treatment here may be performed either by the uniaxial drawing or by the biaxial drawing. The drawing ratio is at least 200% in the uniaxial drawing and at least 150% in each direction in the biaxial drawing while a drawing ratio of 300 to 500% gives the best result in each case. The temperature in the drawing treatment should desirably be a temperature some-what higher than the glass transition temperature of the styrene-based polymer. The starting sheet material subjected to the drawing treatment should preferably have a thickness of about 50 to 500 $\mu$m as obtained by extrusion molding or calendering. When the drawing treatment is performed by the method of inflation molding, the temperature in the molding should be maintained higher by about 20 °C than the melting point of the styrene-based resin so that the biaxial drawing can be performed with good productivity.

The drawing treatment carried out in this manner is followed, if desired, by a thermal fixing treatment. In this case, the film after drawing is thermally fixed in a tensioned condition at a temperature in the range between the melting point and a temperature higher than the glass transition temperature by about 70 °C. This thermal fixing treatment has an effect to increase the heat resistance and dimensional stability of the film as drawn.

Further, shaping of fibers as drawn can be undertaken under the same conditions as described above. In addition to such a melting drawing, wet drawing and gel drawing can also be undertaken.

When the wet drawing or gel drawing should be performed, usable solvents include benzene, toluene, xylene, ethyl benzene, cyclohexane, Decalin, N-methyl pyrrolidone, tetrahydrofuran, carbon tetrachloride, chloroform, dichloro methane, monochloro benzene, dichloro benzene, trichloro benzene, Trichlene and the like. Further, the drawing treatment may optionally be performed of a styrene-based polymer having a syndiotactic structure admixed with a styrene-based polymer having an atactic structure, a styrene-based polymer having an isotactic structure or a styrene-based polymer of a low molecular weight having a syndiotactic structure and further with a suitable amount of an antistatic agent, lubricant, anti-fogging agent, heat stabilizer, dye, pigment, metal powder and inorganic fine powder such as talc, mica and the like.

In the following, the present invention is described in more detail by way of examples and comparative examples.

Example 1.

(1) Preparation of a styrene-based polymer

Into a reaction vessel were introduced 20 ml of toluene as a solvent, 0.05 m mole of tetraethoxy titanium and 5m moles as aluminum atoms of methyl aluminoxane as the catalytic ingredients and then 150 ml of styrene were added thereto at 40 °C to conduct the polymerization reaction for 4 hours. After completion of the reaction, the product was washed with a liquid mixture of methyl alcohol and hydrochloric acid to decompose and remove the catalytic ingredients. Subsequent drying gave 25 g of a styrene-based polymer, i.e. polystyrene. This polymer was then subjected to extraction in a Soxhlet extractor using methyl ethyl ketone as the solvent to obtain 95% by weight of the unextracted matter, which is referred to as MIP hereinbelow. This material had a weight-average molecular weight of 1,350,000, number-average molecular weight of 480,000 and melting point of 270 °C. The $^{13}$C-NMR analysis indicated an absorption at 145.35 ppm assignable to the syndiotactic structure and the syndiotacticity in the racemic pentad was 96% as calculated from the area of the absorption peak.

(2) Preparation of a shaped article

The styrene-based polymer having a syndiotactic structure obtained in (1) described above was extruded out of an extrusion molding machine and shaped into a strand. This strand was subjected to a drawing treatment in a drawing ratio of 300% in an oil bath kept at 130 °C followed by cooling to room temperature without releasing the tension. The thus obtained strand after drawing had a tensile modulus of 150,000 kg/cm$^2$.

Example 2.

In the same manner as in (1) of Example 1, a polystyrene having a weight-average molecular weight of 800,000 and a syndiotacticity of 96% was compounded with each 0.1% by weight of bis(2,4-di-tert-butyl phenyl) pentaerithritol diphosphite and tetrakis[methylene(3,5-di-tert-butyl-4-hydroxy cinnamate)] methane as the antioxidants and pelletized by extrusion out of a double-screw extruder of 40 mm diameter.

The pellets were fed to a single-screw extruder of 40 mm diameter equipped with a T-die at the front end and extruded to give a sheet of 600 μm thickness under the conditions of the temperature of the cylinder at 290 °C, temperature of the T-die at 300 °C and rate of extrusion of 4.2 kg/hour. The cooling roller of the sheet was kept at 55 °C.

The thus obtained transparent sheet had a density of 1.08 g/cm$^3$ and a glass transition temperature of 101 °C. The sheet was subjected to a uniaxial drawing treatment at 108 °C to give a film as drawn in a drawing ratio of 450%. This film was subjected to a thermal fixing treat ment at 190 °C and 210 °C each for 20 seconds under tension.

The physical properties of the thus obtained uniaxially drawn film are shown in Table 1.

Examples 3 and 4.

The transparent sheet obtained in Example 2 was biaxially drawn in 200% or 400% in both of the drawing directions. These biaxially drawn films were subjected to a thermal fixing treatment under tension at 210 °C for 20 seconds. The thus obtained biaxially drawn films are shown in Table 1. Incidetally, the drawn film before the thermal fixing after 400% drawing in each of the length-wise and transverse directions had an elongation at break of 50% showing a great improvement over the undrawn sheet having an elongation at break of 2%.

Comparative Example 1.

Table 1 shows the physical properties determined of the undrawn sheet obtained in Example 2.

Example 5.

A polystyrene having a weight-average molecular weight of 1,500,000 and syndiotacticity of 96% obtained in the same manner as in (1) of Example 1 was compounded with a fine powder of talc to give a content of 2% by weight and then shaped into a sheet at 280 °C using a calendering roller. Thereafter, the sheet was subjected to 350% drawing in the length-wise direction at 115 °C and then 250% drawing in the transverse direction at 118 °C. Further, a thermal fixing treatment thereof was undertaken at 213 °C for 20 seconds. Table 1 shows the physical properties of the thus obtained biaxially drawn film.

Comparative Example 2.

Table 1 shows the physical properties of the undrawn sheet obtained in Example 5.

Example 6.

(1) Preparation of a styrene-based polymer

A styrene-based polymer was prepared in just the same manner as in (1) of Example 1.

(2) Preparation of a shaped article

The styrene-based polymer obtained in (1) described above was put into ethyl benzene as a solvent and dissolved with heating to give a solution of the styrene-based polymer in a concentration of 2% by weight. This solution was poured into a well chilled aluminum-made box to give an agar-like gel. This gel was freed from the liquid by suction on a Buchner funnel under pressing and then dried at room temperature for 24 hours under reduced pressure to give a gel plate. In the next place, this gel plate was cut into a strip which was subjected to drawing at 130 °C in air in a drawing ratio of 800%. The thus obtained material as drawn was subjected to the measurement of mechanical strengths. The results are shown in Table 2.

Example 7.

(1) Preparation of a styrene-based polymer

The same procedure as in (1) of Example 1 was undertaken except that the polymerization temperature was set at 5 °C to give 2.8g of a styrene-based polymer, i.e. polystyrene. The MIP thereof was 94% by weight. The thus obtained styrene-based polymer (MIP) had a weight-average molecular weight of 500,000, number-average molecular weight of 180,000 and syndiotacticity of 95%.

(2) Preparation of a shaped article

The same procedure as in (2) of Example 6 was undertaken excepting the use of the styrene-based polymer obtained in (1) described above. The results are shown in Table 2.

Example 8.

(1) Preparation of a styrene-based polymer

The same procedure as in (1) of Example 1 was undertaken except that the polymerization temperature was set at 30 °C to give 9.0g of a styrene-based polymer, i.e. polystyrene. The MIP thereof was 99% by weight. The thus obtained styrene-based polymer (MIP) had a weight-average molecular weight of 1,800,000, number-average molecular weight of 650,000 and syndiotacticity of 98%.

(2) Preparation of a shaped article

The same procedure as in (2) of Example 6 was undertaken except that the styrene-based polymer obtained in (1) described above was used and the drawing ratio was 700%. The results are shown in Table 2.

Example 9.

(1) Preparation of a styrene-based polymer

The same procedure as in (1) of Example 1 was undertaken except that the polymerization temperature was set at 20 °C to give 4.0g of a styrene-based polymer, i.e. polystyrene. The MIP thereof was 92% by weight. The thus obtained styrene-based polymer (MIP) had a weight-average molecular weight of 2,400,000, number-average molecular weight of 860,000 and syndiotacticity of 100%.

(2) Preparation of a shaped article

The same procedure as in (2) of Example 6 was undertaken except that the styrene-based polymer obtained in (1) described above was used and the drawing ratio was 600%. The results are shown in Table 2.

Example 10.

(1) Preparation of a styrene-based polymer

The same procedure as in (1) of Example 1 was undertaken excepting the polymerization temperature at 0 °C and polymerization time of 8 hours to give 1.5g of a styrene-based polymer, i.e. polystyrene. The MIP thereof was 70% by weight. The thus obtained styrene-based polymer (MIP) had a weight-average molecular weight of 4,500,000, number-average molecular weight of 1,600,000 and syndiotacticity of 100%.

(2) Preparation of a shaped article

The same procedure as in (2) of Example 6 was undertaken except that the styrene-based polymer obtained in (1) described above was used and the drawing ratio was 500%. The results are shown in Table 2.

Comparative Example 3.

The same procedure as in (2) of Example 6 was undertaken excepting omission of the drawing treatment. The results are shown in Table 2.

Comparative Example 4.

10.0g of magnesium dietoxide were reacted with 50 ml of tetrachloro titanium to prepare a titanium compound. The mixture of 1.0m mole of titanium catalytic ingredients supporting the above obtained titanium compound and 10 m mole of triethyl aluminum was used as the catalyst. Polymerization reaction of 100 ml styrene was conducted for 2 hours at 70 °C in heptane as a solvent to give 48.7g of styrene-based polymer i.e. polystyrene, having isotactic structure and weight-average molecular weight of 1,000,000, number-average molecular weight of 260,000. This styrene-based polymer had the unextracted matter of 96% by weight, extracted by using methyl ethyl ketone by the same procedure as in (2) of the Example 1. The above obtained styrene-based polymer having the isotactic structure was subjected to drawing in the same manner as in (2) of the Example 1 (drawing ratio of 600%). The thus obtained material as drawn was subjected to the measurement of the mechanical strengths. The results are shown in Table 2.

Comparative Example 5.

The same procedure as in Comparative Example 4 was undertaken excepting omission of the drawing treatment. The results are shown in Table 2.

Example 11.

(1) Preparation of a styrene-based polymer

Into a reaction vessel were introduced 20 ml of toluene as a solvent and 0.0445 m mole of tetraethoxy titanium and 4.45 m moles as aluminum atoms of methyl aluminoxane as the catalytic ingredients and then 110 ml of styrene were added thereto at 20°C to conduct the polymerization reaction for 7 hours. After completion of the reaction, the product was washed with a liquid mixture of hydrochloric acid and methyl alcohol to decompose and remove the catalytic ingredients. Subsequent drying gave 1.7g of a styrene-based polymer, i.e. polystyrene. The MIP thereof was 98% by weight. The thus obtained styrene-based polymer had a weight-average molecular weight of 3,040,000, number-average molecular weight of 1,220,000 and syndiotacticity of 99%.

(2) Preparation of a shaped article

The styrene-based polymer obtained in (1) described above was put into p-xylene as a solvent and dissolved with heating to give a 1% by weight solution of the styrene-based polymer. This solution was poured into a flat dish to give a rigid agar-like gel. This gel was washed with acetone and a gel mat was obtained by compression. This gel mat was cut into a strip which was dried at room temperature for 10 hours under reduced pressure. This strip was subjected to drawing in a drawing ratio of 700% by the solid-phase coextrusion at 150°C in air together with poly (4-methyl pentene-1). The thus obtained material as drawn was subjected to the measurement of the mechanical strengths. The results are shown in Table 2.

Example 12.

(1) Preparation of a styrene-based polymer

A styrene-based polymer was prepared in just the same manner as in (1) of Example 11.

(2) Preparation of a shaped article

The styrene-based polymer obtained in (1) described above was put into chloroform as a solvent and dissolved with heating to give a solution of the styrene-based polymer in a concentration of 0.1% by weight. This solution was poured into a well chilled copper-made box to give an agar-like soft gel. This gel was freed from the liquid by suction on a Buchner funnel with compression and then dried at room temperature for 10 hours under reduced pressure to give a gel plate. In the next place, this gel plate was cut into a strip which was subjected to a drawing treatment in a drawing ratio of 700% at 150°C in air by the solid-phase coextrusion together with poly(4-methyl pentene-1). Table 2 shows the mechanical strengths of the thus obtained material as drawn.

Example 13.

(1) Preparation of a styrene-based polymer

The same procedure as in (1) of Example 11 was undertaken excepting the polymerization temperature at 50°C and the polymerization time of 80 minutes to give 2.2g of a styrene-based polymer. The MIP thereof was 97% by weight. The thus obtained styrene-based polymer had a weight-average molecular weight of 940,000, number-average molecular weight of 380,000 and syndiotacticity of 97%.

7

(2) Preparation of a shaped article

A film by casting was prepared from the styrene-based polymer obtained in (1) described above using chloroform as the solvent. This cast film was cut into a strip which was subjected to drawing in the same manner as in (2) of Example 11 to give a material as drawn in a drawing ratio of 700%. Table 2 shows the mechanical strengths of the thus obtained material as drawn.

Example 14.

(1) The method for the preparation of a styrene-based polymer

Into a reaction vessel were introduced 180 ml of toluene as a solvent and 0.15 m mole of tetraethoxy titanium and 15 m moles as aluminum atoms of methyl aluminoxane as the catalytic ingredients and then a mixture of 145 m moles of styrene and 15 m moles of p-methyl styrene was added thereto at 30°C to conduct the polymerization reaction for 2 hours. After completion of the reaction, the product was washed with a liquid mixture of hydrochloric acid and methyl alcohol to decompose and remove the catalytic ingredients. Subsequent drying gave 22 g of a styrene-based polymer. In the next place, this polymer was subjected to extraction in a Soxhlet extractor with methyl ethyl ketone as the solvent to give 99% by weight of the unextracted matter. This material had a weight-average molecular weight of 960,000, number-average molecular weight of 460,000 and melting point of 225°C. The content of the p-methyl styrene moiety therein was 23% by moles and absorption bands were found in the analysis by the $^{13}$C-NMR at 145.11 ppm, 145.22 ppm and 142.09 ppm indicating a co-syndiotactic structure similarly to the copolymer described in the specification of Japanese Patent Application 62-017973.

(2) Preparation of a shaped article

A gel plate was prepared in the same manner as in (2) of Example 12 excepting the use of the styrene-based polymer obtained in (1) described above and use of p-xylene as the solvent and a drawn material in a drawing ratio of 700% was obtained by drawing the same. Table 2 shows the mechanical strengths of the thus obtained material as drawn.

## Table 1

| | Drawing ratio, % | | Temperature of thermal fixing, °C | Tensile strength, $kg/cm^2$ (length-wise/ transverse) | Elastic modulus, $kg/cm^2$ (length-wise/ transverse) | Temperature of thermal deforma-tion, °C [1] |
|---|---|---|---|---|---|---|
| | Length-wise direction | Transverse direction | | | | |
| Example 1 | 450 | – | 190 | 1200/500 | 101,000/30,000 | 183 |
| Example 2 | 450 | – | 210 | 1500/500 | 110,000/41,000 | 209 |
| Example 3 | 200 | 200 | 210 | 1050/1000 | 39,000/38,400 | 206 |
| Example 4 | 400 | 400 | 210 | 1200/1180 | 42,000/41,000 | 209 |
| Comparative Example 1 | – | – | – | 660/450 | 28,000/29,000 | 90 |
| Example 5 | 350 | 250 | 213 | 1400/1300 | 43,000/42,000 | 210 |
| Comparative Example 2 | – | – | – | 880/850 | 30,000/30,000 | 97 |

[1] The temperature of thermal deformation was determined by the thermomechanical measurement (TMA).

EP 0 342 234 B1

Table 2

| | Styrene-based polymer | | | Drawing ratio % | Elastic modulus kg/cm² |
| | Weight-average molecular weight | Number-average molecular weight | Syndiotacticity % | | |
|---|---|---|---|---|---|
| Example 6 | 1,350,000 | 480,000 | 96 | 800 | 240,000 |
| Example 7 | 500,000 | 180,000 | 94 | 800 | 200,000 |
| Example 8 | 1,800,000 | 650,000 | 98 | 700 | 260,000 |
| Example 9 | 2,400,000 | 860,000 | 100 | 600 | 270,000 |
| Example 10 | 4,500,000 | 1,600,000 | 100 | 500 | 290,000 |
| Example 11 | 3,040,000 | 1,220,000 | 99 | 700 | 200,000 |
| Example 12 | 3,040,000 | 1,220,000 | 99 | 700 | 100,000 |
| Example 13 | 940,000 | 380,000 | 97 | 700 | 120,000 |
| Example 14 | 960,000 | 460,000 | - | 700 | 100,000 |
| Comparative Example 3 | 1,350,000 | 480,000 | 96 | - | 3,600 |
| Comparative Example 4 | 1,000,000 | 260,000 | 0 | 600 | 5,500 |
| Comparative Example 5 | 1,000,000 | 260,000 | 0 | - | 3,200 |

Possibility of Industrial Utilization

Shaped articles or, in particular, shaped articles such as fibers, films, tapes and the like according to the present invention have greatly improved mechanical strengths or, in particular, elastic modulus imparted by a drawing treatment while maintaining the heat resistance as an inherent property of a styrene-based polymer having a syndiotactic structure.

Accordingly, the shaped articles of a styrene-based polymer of the present invention can be widely and efficiently utilized in various applications including ropes, cables, composite reinforced materials and so on.

**Claims**

1. A shaped article of a styrene-based polymer prepared by drawing a styrene-based polymer having a weight-average molecular weight of at least 100,000 and a stereospecificity of syndiotacticity of at least 85% in the racemic pentad as determined by the nuclear magnetic resonance spectrometric analysis with a carbon isotope to at least 200% in the uniaxial drawing and at least 150% in each direction in the biaxial drawing.

**Patentansprüche**

1. Geformter Gegenstand aus einem Polymeren auf Styrolbasis, der durch Recken eines Polymeren auf Styrolbasis mit einem Gewichtsmittel-Molekulargewicht von mindestens 100 000 und einer mittels kernmagnetischer Resonanzspektrometrieanalyse mit einem Kohlenstoffisotop bestimmten Stereospezifität der Syndiotaktizität von mindestens 85 % in der racemischen Pentade auf mindestens 200 % beim uniaxialen Rechen und mindestens 150 % in jeder Richtung beim biaxialen Recken hergestellt ist.

**Revendications**

1. Article moulé en polymère à base de styrène, fabriqué par étirage d'un polymère à base de styrène, dont la masse moléculaire moyenne en poids vaut au moins 100.000 et dont la stéréospécificité syndiotactique est d'au moins 85 % dans la pentade racémique, déterminée par analyse spectrométrique par résonance magnétique nucléaire avec un isotope du carbone, ledit étirage étant d'au moins 200 % dans le cas d'un étirage monoaxial et d'au moins 150 % dans chaque direction dans le cas d'un étirage biaxial.